# FASCICULE DE BREVET EUROPEEN

(11) **EP 0 741 052 B1**
(45) Date de publication et mention de la délivrance du brevet: **29.03.2000**
(21) Numéro de dépôt: 96400954.2
(22) Date de dépôt: 03.05.1996
(51) Int. Cl.: B60J 5/06

(54) **Véhicule utilitaire comportant un bâti de couverture avec un rancher mobile**
Gestell zur Abdeckung eines Nutzfahrzeuges mit einer bewegbaren Runge
Cover structure for utility vehicle with a movable stanchion

(30) Priorité: 05.05.1995 FR 9505419
(43) Date de publication de la demande: 06.11.1996
(73) Titulaire: GENERAL TRAILERS FRANCE, 91042 Evry (FR)
(72) Inventeur: Franz, Carl, 42111 Wuppertal 1 (DE)
(74) Mandataire: Michelet, Alain

(56) Documents cités:
- EP-A- 0 335 427
- EP-A- 0 621 151
- EP-A- 0 736 404
- DE-A- 2 507 434
- DE-U- 9 312 295
- GB-A- 2 168 011

## Description

L'invention concerne un véhicule utilitaire comportant un bâti de couverture comprenant des montants corniers, des traverses attachées aux extrémités des montants corniers et au moins un rancher mobile ainsi qu'un profilé pour un tel véhicule.

Dans le cadre de la présente invention, sont considérés comme véhicules utilitaires au même titre et sans conditions de dimensions, des camions isolés, des remorques ainsi que des semi-remorques de véhicules déformables.

Le volume de chargement d'un véhicule utilitaire est fonction de la surface du plancher, ou plateau, de ce véhicule sur lequel des objets à transporter peuvent être déposés, mais aussi de la position en hauteur et de l'encombrement d'un bâti de couverture monté sur ce plancher de véhicule. Le volume de chargement est ensuite fonction de la disposition des parois latérales et du toit du véhicule par rapport aux montants et traverses qui forment le bâti de couverture du véhicule. Alors que cette disposition ne pose pas de problème majeur lorsque des panneaux rigides forment les parois latérales et le toit, il n'en est pas de même lorsqu'une au moins une des parois latérales est constituée par un bâche montée coulissante dans au moins une des traverses et lorsque au moins un rancher est, également monté coulissant dans cette traverse.

En effet, le montage d'un ou de plusieurs ranchers mobiles et d'une bâche dans la même traverse entraîne une réduction du volume de chargement effectivement disponible lorsque le ou les ranchers et la bâche sont montés coulissant dans des profilés montés parallèles l'un à côté de l'autre. Compte-tenu des dimensions extérieures maximales des véhicules, imposées aux constructeurs de véhicules utilitaires par différentes réglementations, d'une part, et de l'utilisation croissante de palettes normalisées sur lesquelles les objets à transporter sont disposés pour faciliter et pour accélérer le chargement des véhicules utilitaires, d'autre part, la disposition parallèle et sur un même niveau de profilés spécifiques pour le ou les ranchers et pour la bâche est devenue désavantageuse.

Un véhicule utilitaire connu du document GB-A-2.168.011 comporte un bâti de couverture ainsi qu'un profilé pour un tel bâti de couverture. Le profilé comprend un premier guidage disposé au-dessus d'un second guidage. Le premier guidage est disposé par rapport au second guidage avec, à la fois, une distance verticale et une distance horizontale, la distance horizontale étant telle qu'il y a un décalage horizontal complet entre les deux guidages.

Un véhicule utilitaire connu du document EP-A-0.736.404 (opposable sur le seul plan de la nouveauté et uniquement en ce qui concerne les états Belgique, Allemagne, France Pays-Bas et Portugal) comporte un bâti de couverture ainsi qu'un profilé pour un tel bâti de couverture. Le profilé comprend un premier guidage disposé au-dessus d'un second guidage. Le premier guidage est disposé par rapport au second guidage de manière telle qu'il y a, outre une distance verticale, un recouvrement transversal partiel entre les deux guidages.

Le but de l'invention est d'améliorer le bâti de couverture et plus particulièrement de proposer un véhicule dont le bâti de couverture est formé de façon à permettre un montage mobile et indépendant sur une même traverse d'au moins un rancher et d'une bâche, assurant à la fois le respect des dimensions maximales imposées de véhicules utilitaires en état de marche et une exploitation maximale du volume de chargement d'un tel véhicule, tout en permettant un chargement et un déchargement du véhicule utilitaire exempt de toute contrainte.

Le but de l'invention est atteint par un véhicule utilitaire tel que défini par la revendication 1 de l'un ou de l'autre des deux jeux de revendications, en fonction du pays concerné.

L'invention concerne également les caractéristiques ci-après considérées isolément ou selon toutes leurs combinaisons techniquement possibles.

Le premier guidage et le second guidage ont chacun une fente dans laquelle respectivement le rancher ou les coulisseaux de la bâche sont susceptibles de s'engager, la fente du premier guidage étant accessible de l'intérieur du véhicule et la fente du second guidage étant accessible de l'extérieur du véhicule, lorsque le véhicule est fermé.

Cette disposition tient compte du fait que les ranchers mobiles disposés entre deux montants corniers se trouvent à l'intérieur du véhicule utilitaire par rapport à la paroi latérale de ce dernier. Plus particulièrement, cette disposition facilite encore davantage le mouvement de la bâche, lors de son ouverture, ou de sa fermeture, le long des ranchers immobilisés dans des positions intermédiaires entre les montants corniers correspondants du véhicule.

Le premier guidage a une hauteur suffisante pour permettre à l'extrémité supérieure du rancher de prendre aussi bien une position inférieure lors du déplacement du rancher qu'une position supérieure lorsque le rancher est immobilisé.

L'intérieur du second guidage est formé de façon à permettre aux coulisseaux de la bâche de pivoter autour d'un axe parallèle à l'étendue longitudinale du second guidage.

L'extrémité supérieure du rancher est disposée dans un plan vertical parallèle à l'étendue longitudinale du rancher.

Le rancher est muni d'une articulation à axe horizontal située à proximité de l'extrémité supérieure du rancher.

L'articulation du rancher est située à un niveau légèrement inférieur à celui de la fente du second guidage. Cette disposition permet de manipuler le rancher, et notamment de le déplacer, à partir de l'extérieur du véhicule utilitaire, tout en permettant également la manipulation du rancher à partir de l'intérieur du véhicule.

Les traverses transversales et une des traverses longitudinales sont attachées amoviblement aux extrémités supérieures de montants corniers d'un premier côté du véhicule et de la traverse longitudinale d'un deuxième côté du véhicule, parallèle au premier est attachée rigidement aux extrémités supérieures des montants corniers correspondants et forme une jonction déformable entre la couverture de toit et une paroi latérale s'étendant entre les montants corniers du deuxième côté. Cette disposition permet de soulever le toit du véhicule d'un côté et de faciliter ainsi le chargement et le déchargement du véhicule. Plus particulièrement, cette disposition permet d'exploiter entièrement en hauteur l'espace de chargement, ce qui s'ajoute à l'avantage de pouvoir exploiter entièrement en largeur et longueur l'espace de chargement obtenu par les dispositions de fixation du ou des ranchers et de la bâche selon l'invention.

La traverse longitudinale attachée rigidement aux extrémités supérieures des montants corniers du deuxième côté, et qui forme une jonction déformable, est constituée par un profilé élastiquement déformable.

Le but de l'invention est également atteint par un profilé pour un bâti de couverture d'un véhicule utilitaire, tel que défini par la revendication 8 du jeu de revendications valable pour la Belgique, l'Allemagne, la France, les Pays-Bas et le Portugal et par un profilé pour un bâti de couverture d'un véhicule utilitaire, tel que défini par la revendication 10 du jeu de revendications valable pour l'Espagne, la Grande-Bretagne et l'Italie.

Le profilé est formé de manière que le premier guidage est disposé au-dessus et à une distance verticale du second guidage, ce premier et ce second guidages se recouvrant transversalement au moins partiellement.

Cette disposition des premier et second guidages dans le profilé, conserve l'avantage de la mobilité indépendante de la bâche par rapport aux ranchers des dispositions utilisées jusqu'à maintenant et conserve notamment à la bâche, la possibilité de mouvoir et de se plier librement sans subir les contraintes qui pourraient résulter de la plus grande proximité des ranchers et de la bâche.

D'autres caractéristiques et avantages de l'invention ressortiront à la lecture de la description d'un mode de réalisation avantageux faite en référence aux dessins. Dans ces dessins, les Figures montrent:

Figure 1 une vue en perspective d'un véhicule utilitaire selon l'invention.

Figure 2 une vue arrière du véhicule de la Figure 1.

Figure 3 une coupe transversale d'un profilé selon l'invention.

Figure 4 une coupe transversale d'une jonction déformable.

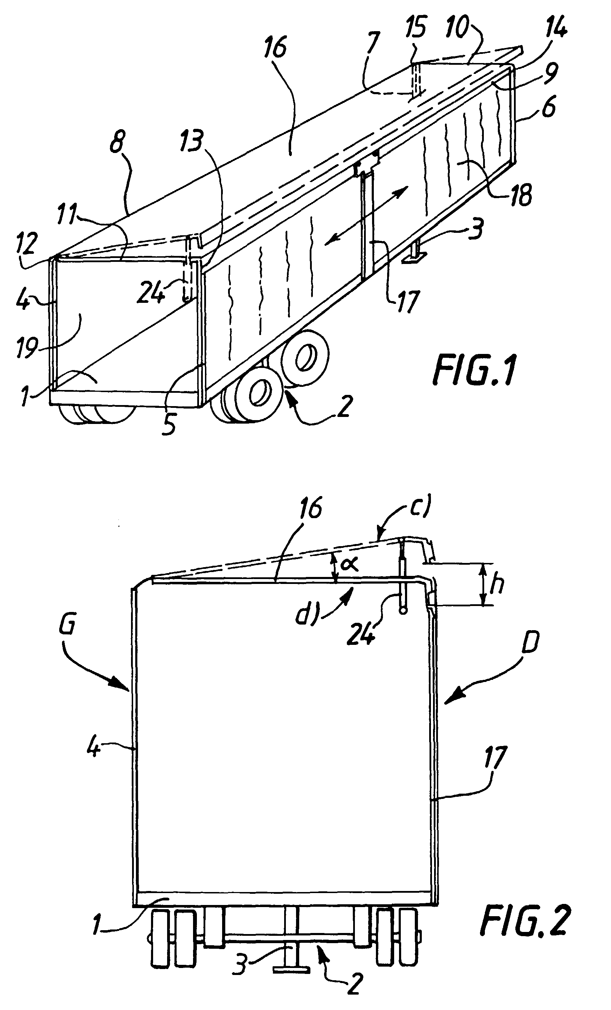

Le véhicule utilitaire représenté sur la Figure 1 est un semi-remorque comprenant un plateau 1, muni d'un essieu double 2 et d'une béquille 3, un bâti de couverture comprenant des montants corniers 4, 5, 6, 7 disposés aux quatre coins du plateau 1, des traverses longitudinales 8, 9 et des traverses transversales 10, 11. Les traverses 8 à 11 sont attachées aux extrémités supérieures 12 à 15 des montants corniers 4 à 7 et forment un support pour une couverture de toit 16.

Le bâti de couverture du véhicule utilitaire de l'invention comprend par ailleurs un rancher 17 monté mobile dans la traverse longitudinale 9 d'un premier côté D du véhicule représentant le côté droit, vu dans le sens de la marche avant du véhicule.

Le premier côté D du véhicule est fermé par une paroi flexible constituée par une bâche 18 montée coulissante dans la traverse longitudinale 9.

De plus, le véhicule utilitaire est muni de trois autres parois latérales. Ce sont des parois rigides, dont la Figure 1 ne montre que la paroi 19 disposée sur un deuxième côté G du véhicule, le côté gauche du véhicule, vu dans le sens de la marche avant. La paroi 19 s'étend ainsi à partir du plateau 1 dans un plan sensiblement parallèle à celui défini par les montants corniers 4 et 7 et la traverse longitudinale 8.

Dans ce qui suit, l'invention est décrite en référence au mode de réalisation particulier d'un véhicule utilitaire fermé par une bâche sur le seul côté droit. Toutefois, il est également concevable, sans sortir de la présente invention, que cette bâche soit située sur le côté gauche ou sur les faces avant ou arrière du véhicule. De même, il est concevable que cette disposition de l'invention soit appliquée à la fois sur deux ou plusieurs côtés du véhicule.

Dans le même désir de simplifier la description, le véhicule utilitaire est représenté comme étant muni d'un seul rancher mobile. Il va de soi, que le véhicule peut être muni, dans le cadre de la présente invention, de plusieurs ranchers dont le nombre dépend des données de construction d'une réalisation particulière d'un tel véhicule.

La traverse longitudinale 9 est constituée par un profilé, par exemple, en aluminium extrudé, ayant la forme d'une cornière présentant une première aile 91 et une deuxième aile 92, approximativement perpendiculaire à la première aile 91. La première aile 91 est formée avec une double paroi afin de pouvoir y recevoir par pincement un bord du toit 16.

La deuxième aile 92 s'étend dans un plan sensiblement vertical lorsque le profilé 9 est mis en place et attaché aux extrémités supérieures 13 et 14 des montants corniers 5 et 6.

L'aile 92 comprend deux espaces creux 93, 94 qui s'étendent en direction longitudinale du profilé 9 et qui constituent respectivement un premier guidage destiné à recevoir le rancher 17 et un second guidage destiné à recevoir des coulisseaux 20 de la bâche 18.

Le premier guidage 93 est disposé au-dessus et à une distance verticale du second guidage 94 de telle façon que les deux guidages 93, 94 se recouvrent transversalement, au moins partiellement.

Le premier guidage 93 a une section transversale approximativement rectangulaire et présente, dans la paroi inférieure, une fente 96 donnant accès à l'intérieur du premier guidage 93. D'un côté de la fente 96, le premier guidage 93 est muni d'une lèvre de guidage 97 formant un angle aigu avec le plan vertical de la seconde aile 92 du profilé 9. De l'autre côté de la fente 96, le guidage 93 est solidaire de la partie 95 enfermant le troisième espace creux du profilé 9.

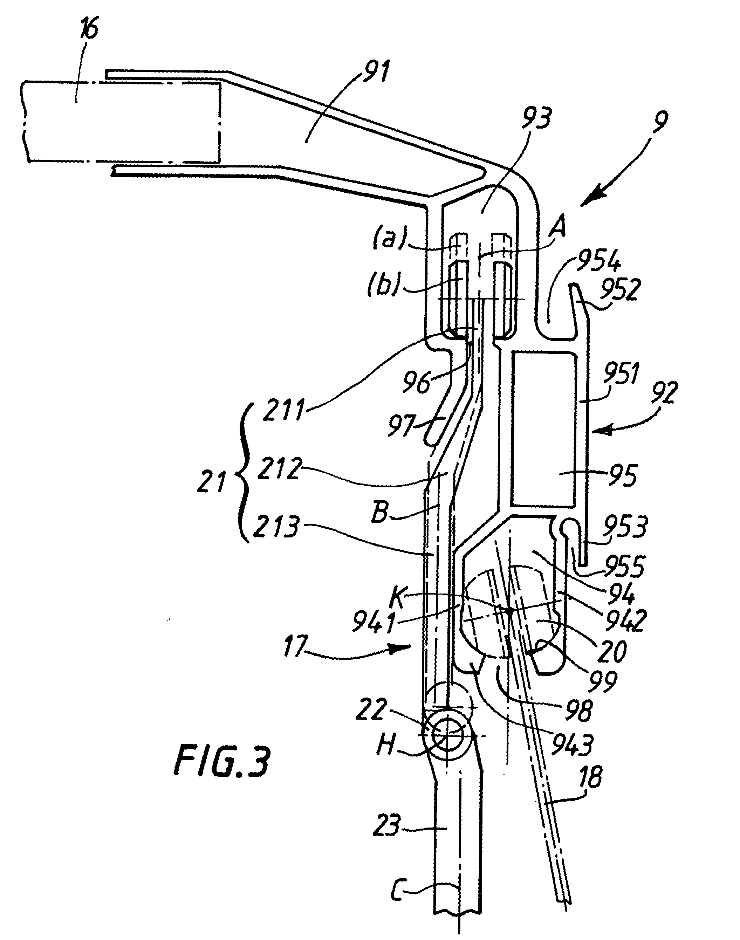

A l'intérieur du premier guidage 93, la paroi inférieure de ce dernier forme une piste permettant le coulissement d'un chariot à galets 21 formant l'extrémité supérieure du rancher 17. Le premier guidage 93 a une hauteur suffisante pour permettre au chariot 21 de prendre une position supérieure a), représentée sur la Figure 3 en pointillés, lorsque le rancher 17 est immobilisé et de prendre une position inférieure b) lors du déplacement du rancher 17.

Le second guidage 94 est formé par deux parois latérales 941, 942, solidaires de la partie 95 du profilé 9, et une paroi inférieure 943 dans laquelle est pratiquée une fente 98 donnant accès à l'intérieur du second guidage 94. La paroi inférieure 943 présente un fond bombé 99 s'étendant de part et d'autre de la fente 98 et formant une piste pour les coulisseaux 20 de la bâche 18.

La seconde aile 92 du profilé 9 comprend par ailleurs une partie 95 qui présente un troisième espace creux et qui est interposée entre les deux guidages 93, 94 et apporte à cette aile la stabilité nécessaire. L'espace creux 95 est délimité vers l'extérieur par une paroi 951 prolongée vers le haut par une bordure 952 et vers le bas par un rebord 953. La bordure 952 définit avec le premier guidage 93 une gouttière 954 et le rebord 953 définit avec la paroi 942 du second guidage 94 une rainure 955 destinée à recevoir un joint d'étanchéité couvrant la partie supérieure de la bâche 18.

Le chariot à galets 21 est relié à une partie principale 23 du rancher 17 par une articulation 22 dont l'axe H est disposé essentiellement horizontalement lorsque le rancher 17 est mis en position. La conception déformable de l'extrémité supérieure du rancher 17 apporte une plus grande liberté à la manipulation du rancher 17 lors de son déplacement et de sa mise en place. Cette disposition permet non seulement la manipulation du rancher à partir de l'intérieur du véhicule, mais elle permet surtout une manipulation aussi facile du rancher 17 à partir de l'extérieur du véhicule, que celle d'un rancher monté selon des modes de montage mobiles utilisés jusqu'à maintenant. Elle évite par ailleurs une grande largeur du premier guidage 93. Une telle grande largeur serait cependant nécessaire pour donner un jeu suffisant aux galets du chariot 21 pour compenser le basculement inévitable du rancher 17 lorsque celui-ci est manipulé à partir de l'extérieur du véhicule. En effet, de tels ranchers sont très longs et très lourds, ce qui entraîne un certain débattement lors de leur manipulation, compte-tenu de la hauteur des véhicules utilitaires et donc des traverses longitudinales par rapport à la taille de l'homme qui manipule les ranchers.

Une largeur trop grande du premier guidage 93 serait, par ailleurs, contraire à l'effet recherché de la présente invention, de réduire la largeur de la traverse dans laquelle sont montées mobiles aussi bien la bâche que le rancher, au profit d'une augmentation de la largeur effectivement disponible du volume de chargement d'un véhicule utilitaire.

Dans ce même esprit de réduction d'encombrement de la traverse longitudinale 9, le chariot à galets 21 présente une section transversale déportée avec une première partie 211, s'étendant essentiellement dans un plan A destiné à être disposée dans la fente 96 et qui est porteuse de galets, ainsi qu'une deuxième partie 212 formant un angle aigu avec la plan A de la première partie 211 et une troisième partie 213 s'étendant dans un plan B parallèle à celui de la première partie 211 et qui est attaché, à son extrémité inférieure à l'articulation 22.

Le déport de la troisième partie 213 du chariot 21 par rapport à la première partie 211 est choisi de manière à obtenir un compromis entre un recouvrement transversal maximal des premier et second guidages 93, 94 d'une part, et un déport minimal nécessaire par l'épaisseur du matériau du chariot 21 et du matériau de la paroi 941 du second guidage 94.

La partie principale 23 du rancher 17 qui est attachée à sa partie supérieure à l'articulation 22, présente une section transversale angulaire orientée vers l'articulation 22 afin de pouvoir ramener le plan C dans lequel s'étend essentiellement le rancher 17, le plus possible vers l'extérieur du véhicule.

Le rancher 17 est muni, à son extrémité inférieure, de moyens de verrouillage permettant l'immobilisation du rancher 17 dans une position choisie sur le plateau 1.

En variante, le rancher 17 peut être formé avec une seconde articulation dont l'axe est parallèle à l'axe H de l'articulation 22. Cette seconde articulation, grâce à laquelle l'extrémité inférieure du rancher 17 peut fléchir par rapport à la partie principale 23 du rancher, facilite notamment la mise en place du rancher dans une des poches pratiquées dans la surface du plateau 1 et qui définissent des positions préétablies pour l'immobilisation du rancher.

La conception du rancher 17 décrit ci-avant contribue favorablement aux avantages du profilé 9 d'un véhicule utilitaire selon l'invention. En effet, lorsque le rancher 17 est mis en position de transport, c'est-à-dire lorsque l'extrémité inférieure du rancher est insérée dans une des poches pratiquées dans la surface du plateau 1, et lorsque, ensuite, le rancher 17 est remonté, soit par des moyens de verrouillage appropriés, soit par le redressement de l'articulation inférieure et de son verrouillage, l'extrémité supérieure du rancher 17 prend appui à la fois sur la lèvre de guidage 97 du premier guidage 93 et sur la paroi latérale 941 du second guidage 94. Par cela, le rancher 17 est soutenu de façon à pouvoir résister aussi bien aux contraintes venant de l'intérieur du véhicule, notamment de la charge du véhicule lorsque ce dernier est en marche, qu'aux contraintes venant de l'extérieur du véhicule, comme par exemple des poussées accidentelles.

Les coulisseaux 20 de la bâche 18 ont une forme adaptée à celle du fond bombé 99 du second guidage 94. Dans le mode de réalisation représenté sur la Figure 3, le fond bombé 99 est formé de façon que sa section transversale ressemble approximativement à un arc de cercle ou un arc elliptique et que la fente 98 s'étende à partir du point le plus bas de l'arc en remontant vers les parois latérales 941, 942.

En variante, le fond bombé 99 peut être formé en sens inverse, c'est-à-dire l'arc peut être orienté de façon que la fente 98 s'étende de part et d'autre du point le plus haut de l'arc et descende vers les parois latérales 941, 942.

L'une et l'autre des deux dispositions du fond bombé 99 permettent aux coulisseaux 20 de pivoter autour d'un axe K parallèle à l'étendue longitudinale du deuxième guidage 94. Ce pivotement facilite le déplacement des coulisseaux 20 lors de l'ouverture et lors de la fermeture de la bâche 18. En effet, la possibilité pour les coulisseaux 20 de pivoter autour de l'axe K réduit les contraintes auxquelles sont exposés les coulisseaux lors du pliage ou dépliage de la bâche 18 pendant l'ouverture ou la fermeture du véhicule. De plus, la bâche est haute et lourde, ce qui entraîne un certain débattement lors de sa manipulation, dû à la hauteur de la traverse 9 par rapport à la taille de l'homme qui manipule la bâche de l'extérieur du véhicule.

Le coulisseau 20 montré schématiquement sur la Figure 3 a une forme générale sphérique, aplatie sur les côtés droit et gauche. Il est représenté en une position oblique correspondant à un débattement de la bâche 18 lors de sa manipulation. Pour tenir compte de l'envergure du débattement de la bâche 18, la fente 98 est assez large et est pratiquée dans la paroi inférieure 943 avec des bords obliques lui donnant la forme d'un entonnoir.

Le toit 16 peut être fixé de manière permanente, avec la traverse longitudinale 8, aux montants corniers 4 et 7 et attaché amoviblement, par la traverse longitudinale 9, aux montants corniers 5 et 6 du côté droit du véhicule. En variante, la traverse 9 peut rester détachée des montants corniers 5 et 6 et la fixation du toit 16 du côté droit du véhicule peut être obtenue par des mécanismes de fermeture 24 disposés sur les parois latérales avant et arrière du véhicule et sur les traverses transversales 10 et 11 du toit 16. Les mécanismes de fermeture 24 peuvent être par exemple des vérins hydrauliques.

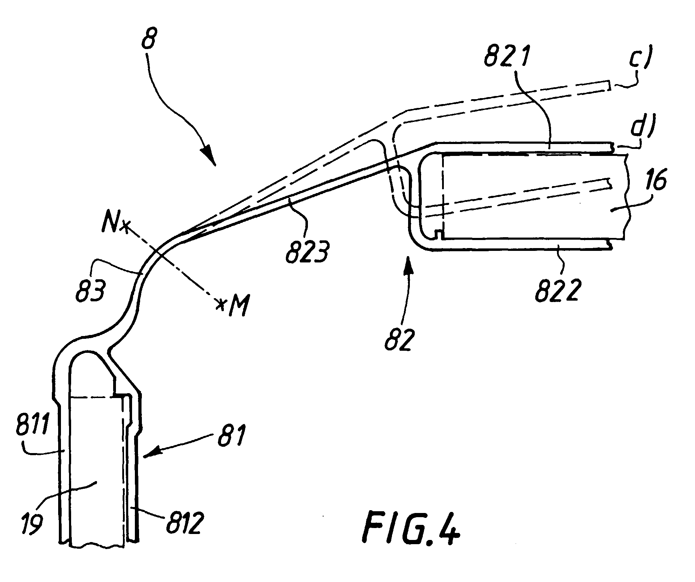

La traverse longitudinale 8 peut être constituée par une charnière ayant un axe de pivotement. Cependant, il est plus avantageux de constituer la traverse longitudinale 8 par un profilé formant une jonction déformable par déformation élastique, qui peut être fabriqué par exemple en aluminium extrudé ou en matière synthétique, renforcée ou non de fibres. Ce profilé élastiquement déformable est formé de manière telle que le toit 16 est en position d'ouverture c) telle que schématiquement indiquée sur les Figures 2 et 4, lorsque le profilé est dans sa position de repos. En conséquence, il faut appliquer une force au moyen du dispositif de fermeture 24 pour fermer le toit 16, position d), redonnant ainsi une contrainte par déformation élastique au profilé constituant la traverse longitudinale 8.

Le profilé 8 présente une section transversale essentiellement en forme d'un L, correspondant à la forme rectangulaire des crêtes d'un espace de chargement essentiellement parallélipipédique. Le profilé 8 comprend une première aile rigide 81 à paroi double et une seconde aile rigide 82 formée, sur la longueur entière du profilé et sur une partie de sa largeur, avec une paroi double espacée. Cette disposition permet de monter le profilé 8 aussi bien sur la paroi latérale rigide 19 que sur un panneau rigide formant le toit 16 par pincement. Plus particulièrement, les parois 811 et 812 de la première aile 81 enferment le bord de la paroi latérale 19 après avoir inséré celle-ci dans l'aile du profilé 8. De manière correspondante, les parois 821 et 822 de la seconde aile 82 enferment le bord d'un panneau rigide formant le toit 16 du véhicule lorsque ce panneau 16 est inséré dans la seconde aile 82 du profilé 8.

La fixation des première et seconde ailes sur les bords de la paroi rigide 19 et du toit 16 peut être effectuée par tout moyen, par exemple par rivetage, pour assurer que les parois des ailes 81 et 82 soient bien appliquées sur les deux côtés de chacune des parois latérales 19 et 316 et de garantir ainsi une jonction stable et étanche.

La paroi extérieure 821 de la deuxième aile 82 est prolongée vers la première aile 81 par une paroi unique 823. La paroi 823 est reliée à la première aile 81 par l'intermédiaire d'une partie 83 qui est élastiquement déformable et dont la forme correspond approximativement à une portion de la surface latérale d'un cylindre se développant autour d'un axe M situé à l'intérieur d'un angle _ défini entre la première aile 81 et la seconde aile 82.

En variante de cette réalisation représentée sur la Figure 4, la partie flexible 83 du profilé 8 pourrait aussi bien être constituée par une paroi flexible dont la forme correspond approximativement à une portion de la surface latérale d'un cylindre qui se développe autour d'un axe N situé à l'extérieur de l'angle _ défini plus haut. Dans cette variante, la forme convexe de la partie 83 représentée sur la Figure 4 serait alors remplacée par une forme concave de la partie flexible du profilé 8.

L'élasticité du profilé 8 est choisie de façon que l'angle d'ouverture Â du toit 16 soit de l'ordre de 9°, ce qui correspond à une remontée de la traverse 9 de l'ordre de 40 cm pour une semi-remorque dont le volume de chargement a une largeur de l'ordre de 2,55 m.

Les signes de référence insérés après les caractéristiques techniques mentionnées dans les revendications, ont pour seul but de faciliter la compréhension de ces dernières, et n'en limitent aucunement la portée.

## Revendications (Revendications pour l'(les) Etat(s) contractant(s) suivant(s): ES, GB, IT)

1. Véhicule utilitaire comportant un bâti de couverture comprenant des montants corniers (4 à 7), des traverses longitudinales (8, 9) et transversales (10, 11) susceptibles d'être fixées aux extrémités supérieures (12 à 15) des montants corniers (4 à 7) et formant un support pour une couverture de toit (16), ainsi qu'au moins un rancher (17) monté mobile dans un premier guidage (93) d'au moins une des traverses (9), cette traverse (9) comportant un second guidage (94) destiné à recevoir, également sous forme de montage mobile, des coulisseaux (20) d'une bâche (18) constituant une paroi latérale (D) flexible du véhicule, le premier guidage (93) étant disposé au-dessus et à une distance verticale du second guidage (94), caractérisé en ce que le premier et le second guidage se recouvrent transversalement au moins partiellement.

2. Véhicule selon la revendication 1, caractérisé en ce que le premier guidage (93) et le second guidage (94) ont chacun une fente (96, 98) dans laquelle respectivement le rancher (17) ou les coulisseaux (20) de la bâche (18) sont susceptibles de s'engager, la fente (96) du premier guidage (93) étant accessible à l'intérieur du véhicule et la fente (98) du second guidage (94) étant accessible de l'extérieur du véhicule, lorsque le véhicule est fermé

3. Véhicule selon la revendication 1 ou 2, caractérisé en ce que le premier guidage (93) a une hauteur suffisante pour permettre à l'extrémité supérieure (21) du rancher (17) de prendre aussi bien une position inférieure (b) lors du déplacement du rancher (17) qu'une position supérieure (a) lorsque le rancher (17) est immobilisé.

4. Véhicule selon la revendication 3, caractérisé en ce que l'intérieur du second guidage (94) est formé de façon à permettre aux coulisseaux (20) de pivoter autour d'un axe (K) parallèle à l'étendue longitudinale du second guidage (94).

5. Véhicule selon l'une quelconque des revendications 1 à 4, caractérisé en ce que l'extrémité supérieure (21) du rancher (17) est disposée dans un plan vertical A parallèle à l'étendue longitudinale (B) du rancher (17).

6. Véhicule selon l'une quelconque des revendications 1 à 5, caractérisé en ce que le rancher(17) est muni d'une articulation (22) à l'axe horizontal (H) située à proximité supérieure (21) du rancher(17).

7. Véhicule selon la revendication 6, caractérisé en ce que l'articulation (22) est située à un niveau légèrement inférieur à celui de la fente (98) du second guidage (94).

8. Véhicule selon l'une quelconque des revendications 1 à 7, caractérisé en ce que les traverses transversales (10, 11) et une traverse longitudinale (9) sont attachées amoviblement aux extrémités supérieures (13, 14) des montants corniers (5, 6) d'un premier côté (D) du véhicule et en ce que la traverse longitudinale (8) d'un deuxième côté (G) du véhicule, parallèle au premier (D), est attachée rigidement aux extrémités supérieures (12, 15) des montants corniers(4, 7) correspondants et forme une jonction déformable entre la couverture de toit (16) et une paroi latérale (19) s'étendant entre les montants corniers (4, 5) du deuxième côté (G) du véhicule.

9. Véhicule selon la revendication 8, caractérisé en ce que la traverse longitudinale (8) formant une jonction déformable est constituée par un profilé élastiquement déformable.

10. Profilé pour un bâti de couverture d'un véhicule utilitaire comportant un premier guidage (93) destiné à recevoir un rancher (17) mobile et un second guidage (94) destiné à recevoir, également sous forme d'un montage mobile des coulisseaux (20) d'une bâche (18) constituant une paroi latérale flexible (D) du véhicule, le premier guidage (93) étant disposé au-dessus et à une distance verticale du second guidage (94), caractérisé en ce que le premier et le second guidages (93, 94) se recouvrent transversalement au moins partiellement.

## Revendications (Revendications pour l'(les) Etat(s) contractant(s) suivant(s): BE, DE, FR, NL, PT)

1. Véhicule utilitaire comportant un bâti de couverture comprenant des montants corniers (4 à 7), des traverses longitudinales (8, 9) et transversales (10, 11) susceptibles d'être fixées aux extrémités supérieures (12 à 15) des montants corniers (4 à 7) et formant un support pour une couverture de toit (16), ainsi qu'au moins un rancher (17) monté mobile dans un premier guidage (93) d'au moins une des traverses (9), cette traverse (9) comportant un second guidage (94) destiné à recevoir, également sous forme de montage mobile, des coulisseaux (20) d'une bâche (18) constituant une paroi latérale (D) flexible du véhicule, le premier guidage (93) étant disposé au-dessus et à une distance verticale du second guidage (94), le premier et le second guidage se recouvrant transversalement au moins partiellement et ayant chacun une fente (96, 98) dans laquelle respectivement le rancher (17) ou les coulisseaux (20) de la bâche (18) sont susceptibles de s'engager, la fente (96) du premier guidage étant accessible de l'intérieur du véhicule et la fente (98) du second guidage (94) étant accessible de l'extérieur du véhicule, lorsque le véhicule est fermé, caractérisé en ce que l'extrémité supérieure (21) du rancher (17) prend une position inférieure (b) dans le premier guidage (93) lors du déplacement du rancher (17) et une position supérieure (a) lorsque le rancher(17) est immobilisé.

2. Véhicule selon la revendication 1, caractérisé en ce que l'intérieur du second guidage (94) est formé de façon à permettre aux coulisseaux (20) de pivoter autour d'un axe (K) parallèle à l'étendue longitudinale du second guidage (94).

3. Véhicule selon la revendication 1 ou 2, caractérisé en ce que l'extrémité supérieure (21) du rancher (17) est disposée dans un plan vertical A parallèle à l'étendue longitudinale (B) du rancher(17).

4. Véhicule selon l'une quelconque des revendications 1 à 3, caractérisé en ce que le rancher (17) est muni d'une articulation (22) à axe horizontal (H) située à proximité de l'extrémité supérieure (21) du rancher (17).

5. Véhicule selon la revendication 4, caractérisé en ce que l'articulation (22) est située à un niveau légèrement inférieur à celui de la fente (98) du second guidage (94).

6. Véhicule selon l'une quelconque des revendications 1 à 5, caractérisé en ce que les traverses transversales (10, 11) et une traverse longitudinale (9) sont attachées amoviblement aux extrémités supérieures (13, 14) des montants corniers (5, 6) d'un premier côté (D) du véhicule et en ce que la traverse longitudinale (8) d'un deuxième côté (G) du véhicule, parallèle au premier (D), est attachée rigidement aux extrémités supérieures (12, 15) des montants corniers (4, 7) correspondants et forme une jonction déformable entre la couverture de toit (16) et une paroi latérale (19) s'étendant entre les montants corniers (4, 5) du deuxième côté (G) du véhicule.

7. Véhicule selon la revendication 6, caractérisé en ce que la traverse longitudinale (8) formant une jonction déformable est constituée par un profilé élastiquement déformable.

8. Profilé pour un bâti de couverture d'un véhicule utilitaire comportant un premier guidage (93) destiné à recevoir un rancher (17) mobile et un second guidage (94) destiné à recevoir, également sous forme d'un montage mobile, des coulisseaux (20) d'une bâche (18) constituant une paroi latérale flexible (D) du véhicule, le premier guidage étant disposé au-dessus et à une distance verticale du second guidage,ces premier et second guidages se recouvrant transversalement au moins partiellement, caractérisé en ce que l'extrémité supérieure du rancher (17) prend une position inférieure (b) dans le premier guidage (93) lors du déplacement du rancher (17) et une position supérieure (a) lorsque le rancher (17) est immobilisé.

## Patentansprüche (Patentansprüche für folgende(n) Vertragsstaat(en): ES, GB, IT)

1. Nutzfahrzeug, bestehend aus einem Abdeckgehäuse mit Eckstützen (4-7), Längsstreben (8, 9) und Querstreben (10, 11), die an den oberen Enden (12-15) der Eckstützen (4-7) befestigt werden können und eine Abstützung für eine Dachabdeckung (16) bilden, ebenso wie wenigstens aus einer Stütze (17), die in einer ersten Führung (93) wenigstens einer der Streben (9) verschiebbar gelagert ist, wobei die Strebe (9) eine zweite Führung (94) aufweist, die dazu bestimmt ist, ebenfalls in Form einer verschiebbaren Lagerung Kulissen (20) einer Plane (18) aufzunehmen, die eine flexible Seitenwand (D) des Fahrzeugs bildet,
**dadurch gekennzeichnet, daß**
die erste Führung (93) oberhalb und vertikal beabstandet zu der zweiten Führung (94) angeordnet ist, wobei die erste und die zweite Führung einander wenigstens teilweise überdecken.

2. Fahrzeug nach Anspruch 1,
**dadurch gekennzeichnet, daß**
die erste Führung (93) und die zweite Führung (94) jeweils einen Schlitz (96; 98) haben, in den jeweils die Stütze (17) oder die Kulissen (20) der Plane (18) eingreifen können, wobei der Schlitz (96) der ersten Führung (93) vom Inneren des Fahrzeugs aus zugänglich ist, und der Schlitz (98) der zweiten Führung (94) von außerhalb des Fahrzeugs zugänglich ist, wenn das Fahrzeug geschlossen ist.

3. Fahrzeug nach Anspruch 1 oder 2,
**dadurch gekennzeichnet, daß**
die erste Führung (93) eine Höhe hat, die ausreicht um es dem oberen Ende (21) der Stütze (17) zu ermöglichen, auch eine untere Position (b) beim Verstellen der Stütze (17) wie auch eine obere Position (a) einzunehmen, wenn die Stütze (17) arretiert ist.

4. Fahrzeug nach Anspruch 3,
**dadurch gekennzeichnet, daß**
das Innere der zweiten Führung (94) derart ausgebildet ist, daß die Kulissen (20) um eine Achse (K) parallel zur Längserstreckung der zweiten Führung (94) schwenken können.

5. Fahrzeug nach einem der Ansprüche 1 - 4,
**dadurch gekennzeichnet, daß**
das obere Ende (21) der Stütze (17) in einer vertikalen Ebene (A) parallel zur Längserstreckung (B) der Stütze (17) angeordnet ist.

6. Fahrzeug nach einem der Ansprüche 1 - 5,
**dadurch gekennzeichnet, daß**
die Stütze (17) mit einem Gelenk (22) mit horizontaler Achse (H) versehen ist, das nahe dem oberen Ende (21) der Stütze (17) liegt.

7. Fahrzeug nach Anspruch 6,
**dadurch gekennzeichnet, daß**
daß das Gelenk (22) in einer Höhe etwas niedriger als die des Schlitzes (98) der zweiten Führung (94) liegt.

8. Fahrzeug nach einem der Ansprüche 1 - 7,
**dadurch gekennzeichnet, daß**
die Querstreben (10, 11) und eine Längsstrebe (9) lösbar an den oberen Enden (13, 14) der Eckstützen (5, 6) einer ersten Seite (D) des Fahrzeugs befestigt sind, und daß die Längsstrebe (8) einer zweiten Seite (G) des Fahrzeugs parallel zur ersten (D) an den oberen Enden (12, 15) der entsprechenden Eckstützen (4, 7) starr befestigt ist und eine verformbare Verbindung zwischen der Dachabdeckung (16) und einer Seitenwand (19) bildet, die sich zwischen den Eckstützen (4, 7) der zweiten Seite (G) des Fahrzeugs erstreckt.

9. Fahrzeug nach Anspruch 8,
**dadurch gekennzeichnet, daß**
die Längsstrebe (8), die eine verformbare Verbindung bildet, aus einem elastisch verformbaren Profilteil besteht.

10. Profilteil für eine Dachabdeckung eines Nutzfahrzeugs mit einer ersten Führung (93), die dazu bestimmt ist, eine verschiebbare Stütze (17) aufzunehmen, und einer zweiten Führung (93), die dazu bestimmt ist, ebenfalls in Form einer verschiebbaren Lagerung, Kulissen (20) einer Plane (18) aufzunehmen, die eine flexible Seitenwand (D) des Fahrzeugs bildet,
**dadurch gekennzeichnet, daß**
die erste Führung (93) oberhalb und vertikal beabstandet zu der zweiten Führung (94) angeordnet ist, wobei sich die erste und die zweite Führung wenigstens teilweise überdecken.

## Patentansprüche (Patentansprüche für folgende(n) Vertragsstaat(en): BE, DE, FR, NL, PT)

1. Nutzfahrzeug, bestehend aus einem Abdeckgehäuse mit Eckstützen (4-7), Längsstreben (8, 9) und Querstreben (10, 11), die an den oberen Enden (12-15) der Eckstützen (4-7) befestigt werden können und eine Abstützung für eine Dachabdeckung (16) bilden, ebenso wie wenigstens aus einer Stütze (17), die in einer ersten Führung (93) wenigstens einer der Streben (9) verschiebbar gelagert ist, wobei die Strebe (9) eine zweite Führung (94) aufweist, die dazu bestimmt ist, ebenfalls in Form einer verschiebbaren Lagerung Kulissen (20) einer Plane (18) aufzunehmen, die eine flexible Seitenwand (D) des Fahrzeugs bildet, wobei die erste Führung (93) oberhalb und vertikal beabstandet zu der zweiten Führung (94) angeordnet ist und die erste und die zweite Führung einander wenigstens teilweise überdecken und jeweils einen Schlitz (96, 98) haben, in den jeweils die Stütze (17) oder die Kulissen (20) der Plane (18) eingreifen können, wobei der Schlitz (96) der ersten Führung (93) vom Inneren des Fahrzeugs aus zugänglich ist, und der Schlitz (98) der zweiten Führung (94) von außerhalb des Fahrzeugs zugänglich ist, wenn das Fahrzeug geschlossen ist, dadurch gekennzeichnet, daß das obere Ende (21) der Stütze (17) in der ersten Führung (93) eine untere Position (b) beim Verstellen der Stütze (17) und eine obere Position (a), wenn die Stütze (17) arretiert ist, einnimmt.

2. Fahrzeug nach Anspruch 1,
dadurch gekennzeichnet, daß
das Innere der zweiten Führung (94) derart ausgebildet ist, daß die Kulissen (20) um eine Achse (K) parallel zur Längserstreckung der zweiten Führung (94) schwenken können.

3. Fahrzeug nach Anspruch 1 oder 2,
dadurch gekennzeichnet, daß
das obere Ende (21) der Stütze (17) in einer vertikalen Ebene (A) parallel zur Längserstreckung (B) der Stütze (17) angeordnet ist.

4. Fahrzeug nach einem der Ansprüche 1-3,
dadurch gekennzeichnet, daß
die Stütze (17) mit einem Gelenk (22) mit horizontaler Achse (H) versehen ist. das nahe dem oberen Ende (21) der Stütze (17) liegt.

5. Fahrzeug nach Anspruch 4,
dadurch gekennzeichnet, daß
das Gelenk (22) in einer Höhe etwas niedriger als die des Schlitzes (98) der zweiten Führung (94) liegt.

6. Fahrzeug nach einem der Ansprüche 1-5,
dadurch gekennzeichnet, daß
die Querstreben (10, 11) und eine Längsstrebe (9) lösbar an den oberen Enden (13, 14) der Eckstützen (5, 6) einer ersten Seite (D) des Fahrzeugs befestigt sind, und daß die Längsstrebe (8) einer zweiten Seite (G) des Fahrzeugs parallel zur ersten (D) an den oberen Enden (12, 15) der entsprechenden Eckstützen (4, 7) starr befestigt ist und eine verformbare Verbindung zwischen der Dachabdeckung (16) und einer Seitenwand (19) bildet, die sich zwischen den Eckstützen (4, 7) der zweiten Seite (G) des Fahrzeugs erstreckt.

7. Fahrzeug nach Anspruch 6,
dadurch gekennzeichnet, daß
die Längsstrebe (8), die eine verformbare Verbindung bildet, aus einem elastisch verformbaren Profilteil besteht.

8. Profilteil für eine Dachabdeckung eines Nutzfahrzeugs mit einer ersten Führung (93), die dazu bestimmt ist, eine verschiebbare Stütze (17) aufzunehmen, und einer zweiten Führung (94), die dazu bestimmt ist, ebenfalls in Form einer verschiebbaren Lagerung, Kulissen (20) einer Plane (18) aufzunehmen, die eine flexible Seitenwand (D) des Fahrzeugs bildet, wobei die erste Führung (93) oberhalb und vertikal beabstandet zu der zweiten Führung (94) angeordnet ist, wobei sich die erste und die zweite Führung wenigstens teilweise überdecken,
dadurch gekennzeichnet, daß
das obere Ende der Stütze (17) in der ersten Führung (93) eine untere Position (b) beim Verstellen der Stütze (17) und eine obere Position (a), wenn die Stütze arretiert ist, einnimmt.

## Claims (Claims for the following Contracting State(s): ES, GB, IT)

1. Utility vehicle comprising a covering framework comprising corner posts (4 to 7), longitudinal members (8,9) and transverse members (10,11) which can be fixed to the upper ends (12 to 15) of the corner posts (4 to 7) and form a support for a roof covering (16), as well as at least one stanchion (17) mounted so that it can move in a first guide (93) of at least one of the members (9), said member (9) comprising a second guide (94) intended to accomodate, also mounted so that it can move, runners (20) of a tarpaulin (18) constituting a flexible side wall (D) of the vehicle, the first guide (93) being arranged above and at some vertical distance from the second guide (94), characterized in that the first and second guide are overlapping transversely at least in part.

2. Vehicle according to Claim 1, characterized in that the first guide (93) and the second guide (94) each have a slot (96, 98) in which respectively the stanchion (17) or the runners (20) of the tarpaulin (18) can engage, the slot (96) of the first guide (93) being accessible from inside the vehicle, and the slot (98) of the second guide (94) being accessible from outside the vehicle, when the vehicle is closed.

3. Vehicle according to Claim 1 or 2, characterized in that the first guide (93) is high enough to allow the upper end (21) of the stanchion (17) to adopt either a lower position (b) while the stanchion (17) is being shifted, or an upper position (a) when the stanchion (17) is immobilized.

4. Vehicle according to Claim 3, characterized in that the inside of the second guide (94) is formed in such a way as to allow the runners (20) to pivot about an axis (K) parallel to the longitudinal span of the second guide (94).

5. Vehicle according to any one of Claims 1 to 4, characterized in that the upper end (21) of the stanchion (17) is arranged in a vertical plane (A) parallel to the longitudinal span (B) of the stanchion (17).

6. Vehicle according to any one of Claims 1 to 5, characterized in that the stanchion (17) is provided with a pivot means (22), with a horizontal axis (H), located close to the upper end (21) of the stanchion (17).

7. Vehicle according to Claim 6, characterized in that the pivot means (22) is located at a level slightly below that of the slot (98) of the second guide (94).

8. Vehicle according to any one of Claims 1 to 7, characterized in that the transverse members (10, 11) and one longitudinal member (9) are attached removably to the upper ends (13, 14) of the corner posts (5, 6) on a first side (D) of the vehicle and in that the longitudinal member (8) of a second side (G) of the vehicle, parallel to the first (D), is attached rigidly to the upper ends (12, 15) of the corresponding comer posts (4, 7) and forms a deformable joint between the roof covering (16) and a side wall (19) extending between the comer posts (4, 5) on the second side (G) of the vehicle.

9. Vehicle according to Claim 8, characterized in that the longitudinal member (8) forming a deformable joint consists of an elastically deformable section piece.

10. Section piece for a framework for covering a utility vehicle comprising a first guide (93) intended to accomodate a mobile stanchion (17) and a second guide (94) intended to accomodate, also mounted so that it can move, runners (20) of a tarpaulin (18) constituting a flexible side wall (D) of the vehicle, the first guide (93) being arranged above and at some vertical distance from the second guide (94), characterized in that the first and second guide (93, 94) are overlapping transversely at least in part.

## Claims (Claims for the following Contracting State(s): BE, DE, FR, NL, PT)

1. Utility vehicle comprising a covering framework comprising corner posts (4 to 7), longitudinal members (8,9) and transverse members (10, 11) which can be fixed to the upper ends (12 to 15) of the corner posts (4 to 7) and form a support for a roof covering (16), as well as at least one stanchion (17) mounted so that it can move in a first guide (93) of at least one of the members (9), said member (9) comprising a second guide (94) intended to accomodate, also mounted so that it can move, runners (20) of a tarpaulin (18) constituting a flexible side wall (D) of the vehicle, the first guide (93) being arranged above and at some vertical distance from the second guide (94), the first and second guide overlapping transversely at least in part and having a slot (96, 98) in which respectively the stanchion (17) or the runners (20) of the tarpaulin (18) can engage, the slot (96) of the first guide (93) being accessible from inside the vehicle, and the slot (98) of the second guide (94) being accessible from outside the vehicle, when the vehicle is closed, characterized in that the upper end (21) of the stanchion (17) adopts a lower position (b) in the first guide (93) while the stanchion (17) is being shifted, and an upper position (a) when the stanchion (17) is immobilized.

2. Vehicle according to Claim 1, characterized in that the inside of the second guide (94) is formed in such a way as to allow the runners (20) to pivot about an axis (K) parallel to the longitudinal span of the second guide (94).

3. Vehicle according to Claim 1 or 2, characterized in that the upper end (21) of the stanchion (17) is arranged in a vertical plane (A) parallel to the longitudinal span (B) of the stanchion (17).

4. Vehicle according to any one of Claims 1 to 3, characterized in that the stanchion (17) is provided with a pivot means (22), with a horizontal axis (H), located close to the upper end (21) of the stanchion (17).

5. Vehicle according to Claim 4, characterized in that the pivot means (22) is located at a level slightly below that of the slot (98) of the second guide (94).

6. Vehicle according to any one of Claims 1 to 5, characterized in that the transverse members (10, 11) and one longitudinal member (9) are attached removably to the upper ends (13, 14) of the corner posts (5, 6) on a first side (D) of the vehicle and in that the longitudinal member (8) of a second side (G) of the vehicle, parallel to the first (D), is attached rigidly to the upper ends (12, 15) of the corresponding corner posts (4, 7) and forms a deformable joint between the roof covering (16) and a side wall (19) extending between the corner posts (4, 5) on the second side (G) of the vehicle.

7. Vehicle according to Claim 6, characterized in that the longitudinal member (8) forming a deformable joint consists of an elastically deformable section piece.

8. Section piece for a framework for covering a utility vehicle comprising a first guide (93) intended to accomodate a mobile stanchion (17) and a second guide (94) intended to accomodate, also mounted so that it can move, runners (20) of a tarpaulin (18) constituting a flexible side wall (D) of the vehicle, the first guide (93) being arranged above and at some vertical distance from the second guide (94), said first and second guide overlapping transversely at least in part, characterized in that the upper end of the stanchion (17) adopts a lower position (b) in the first guide (93) while the stanchion (17) is being shifted and an upper position (a) when the stanchion (17) is immobilized.
